# EUROPÄISCHE PATENTANMELDUNG

(11) **EP 4 663 438 A1**
(43) Veröffentlichungstag der Anmeldung: **17.12.2025**
(21) Anmeldenummer: 25176433.8
(22) Anmeldetag: 14.05.2025
(51) Int. Cl.: B60H 1/00, B60H 1/32

(54) **LANDWIRTSCHAFTLICHE ARBEITSMASCHINE SOWIE VERFAHREN ZU IHREM BETRIEB**

(30) Priorität: 11.06.2024 DE 102024116328
(71) Anmelder: CLAAS Industrietechnik GmbH, 33106 Paderborn (DE)
(72) Erfinder: Wilk, Benjamin, 37671 Höxter (DE); Heymann, Philipp, 59519 Möhnesee Wamel (DE)
(74) Vertreter: CLAAS Gruppe

(57) **Zusammenfassung**

Die vorliegende Anmeldung betrifft eine landwirtschaftliche Arbeitsmaschine (1), insbesondere Traktor, umfassend eine Fahrerkabine (2), eine Batterie (3) zur Vorhaltung und Bereitstellung elektrischer Energie, mindestens ein Arbeitsorgan (4) zur Anwendung im Rahmen der Erledigung eines landwirtschaftlichen Arbeitsauftrags, mindestens ein mit Hydrauliköl arbeitendes Hydrauliksystem (5) zum Betrieb des mindestens einen Arbeitsorgans (4).

Um eine landwirtschaftliche Arbeitsmaschine bereitzustellen, bei der die thermische Konditionierung von Batterie und Fahrerkabine besonders zuverlässig und effizient ist, wird ein System zur thermischen Konditionierung der Batterie (3) und/oder der Fahrerkabine (2) mittels einer Wärmepumpe (6) vorgeschlagen, wobei die Wärmepumpe (6) einen von einem Arbeitsmedium durchströmten Fluidkreislauf mit einer ansteuerbaren Ventilanordnung (11) umfasst, wobei die Ventilanordnung (11) es erlaubt, den Fluidkreislauf wahlweise zwischen einem Betrieb als Heizkreislauf zur Erwärmung der Fahrerkabine (2) und/oder der Batterie (3) und einem Betrieb als Kühlkreislauf zur Abkühlung der Fahrerkabine (2) und/oder der Batterie (3) umzuschalten, wobei das Hydrauliksystem (5) derart thermisch in den Fluidkreislauf eingebunden werden kann, dass zwischen dem Hydrauliköl und dem Arbeitsmedium Wärmeenergie austauschbar ist.

## Beschreibung

Die vorliegende Anmeldung bezieht sich allgemein auf eine landwirtschaftliche Arbeitsmaschine gemäß dem Oberbegriff von Anspruch 1. Zu den verwandten Feldern des technischen Gebiets gehören die Bodenbearbeitung in der Landwirtschaft und Teile, Einzelheiten oder Zubehör von landwirtschaftlichen Arbeitsmaschinen allgemein.

Aus EP 2 801 492 B1 ist ein Heiz-/Kühlsystem für ein Fahrzeug bekannt. Das Fahrzeug umfasst einen Verbrennungsmotor, der mit einem geschlossenen Motorkühlmittelkreislauf gekoppelt ist, um Motorkühlmittel durch diesen zu zirkulieren. Das Heiz-/Kühlsystem umfasst einen Kältemittelkompressor, der mit einem geschlossenen Kältemittelkreislauf gekoppelt ist, um Kältemittel dort hindurch zu zirkulieren, wobei der Kältemittelkompressor mit dem Verbrennungsmotor gekoppelt ist, wodurch der Kältemittelkompressor angetrieben wird. Das Heiz-/Kühlsystem umfasst weiterhin einen geschlossenen wärmeregulierten Fluidkreislauf, um wärmereguliertes Fluid dort hindurch zu zirkulieren, sowie einen konsolidierten Heiz-/Kühlkern, der mit dem geschlossenen Motorkühlmittelkreislauf, mit dem geschlossenen Kältemittelkreislauf und mit dem geschlossenen wärmeregulierten Fluidkreislauf gekoppelt ist. Das Fahrzeug umfasst weiterhin eine Batterie, die an interne Wärmetauscher angeschlossen ist, um in der Batterie erzeugte Wärmeenergie an das wärmeregulierte Fluid nach Bedarf zu übertragen und somit die Batterie auf einer definierten Temperatur zu halten. Die internen Wärmetauscher ermöglichen es ebenfalls, dass Wärmeenergie aus dem wärmeregulierten Fluid an die Batterie übertragen wird, wenn dies erforderlich ist, um die Batterie auf der definierten Temperatur zu halten. Wenn die Temperatur in der Batterie höher ist als die Temperatur des wärmeregulierten Fluids, wird Wärmeenergie aus der Batterie in das wärmeregulierte Fluid geleitet und die Temperatur der Batterie so entsprechend reduziert. Wenn die Temperatur der Batterie hingegen niedriger ist als die Temperatur des wärmeregulierten Fluids, wird Wärmeenergie aus dem wärmeregulierten Fluid in die Batterie geleitet und die Temperatur der Batterie entsprechend erhöht.

Ferner beschreibt die WO 2021/190786 A1 ein System zum Erwärmen eines batterieelektrischen Energiespeichers bei rein elektrisch angetriebenen Fahrzeugen, indem zwei (Elektro-)Motoren zur Erzeugung von thermischer Energie einander entgegengesetzt betrieben werden. Diese thermische Energie wird über einen thermischen Kreislauf dann in einem sogenannten "warm up mode" einer Batterie zum Erwärmen derselben zugeführt.

Herkömmliche landwirtschaftliche Arbeitsmaschinen sind oft mit Batterien und Fahrerkabinen ausgestattet, die bei extremen Temperaturen, sei es Hitze oder Kälte, beeinträchtigt werden können. Dies kann zu einer verringerten Leistungsfähigkeit der Batterie und einem unkomfortablen Arbeitsumfeld für den Fahrer führen. Darüber hinaus kann die Effizienz des Hydrauliksystems der Arbeitsmaschine durch Temperaturschwankungen beeinträchtigt werden.

Die vorliegende Anmeldung befasst sich mit dem Problem der thermischen Konditionierung von Batterie und Fahrerkabine in landwirtschaftlichen Arbeitsmaschinen, insbesondere Traktoren. Diese soll zuverlässig und effizient sein.

Die zugrundeliegende Aufgabe wird mittels einer landwirtschaftlichen Arbeitsmaschine mit den Merkmalen des Anspruchs 1 gelöst. Vorteilhafte Ausgestaltungen ergeben sich aus den Unteransprüchen sowie der Beschreibung.

Die landwirtschaftliche Arbeitsmaschine kann insbesondere von einem Traktor gebildet sein. Eine Ausgestaltung als Mähdrescher oder Feldhäcksler ist ebenso denkbar. Die Arbeitsmaschine umfasst eine Fahrerkabine. In dieser nimmt ein Fahrer der Arbeitsmaschine Platz, um die Arbeitsmaschine bestimmungsgemäß zu betreiben. Die Arbeitsmaschine umfasst ferner eine Batterie zur Vorhaltung und Bereitstellung elektrischer Energie. Die Batterie bildet mithin einen elektrischen Energiespeicher. Sie kann beispielsweise und vorzugsweise von einer Lithium-Ionen-Batterie gebildet sein und eine Kapazität von mehr als 50 kWh, vorzugsweise mehr als 75 kWh, weiter vorzugsweise mehr als 100 kWh, aufweisen. Die Arbeitsmaschine umfasst ferner mindestens ein Arbeitsorgan zur Anwendung im Rahmen der Erledigung eines landwirtschaftlichen Arbeitsauftrags. Hierbei kann es sich beispielsweise um eine Getriebeanordnung, eine Zapfwelle (PTO) oder dergleichen handeln. Ferner umfasst die Arbeitsmaschine mindestens ein mit Hydrauliköl arbeitendes Hydrauliksystem zum Betrieb des mindestens einen Arbeitsorgans.

Ferner umfasst die Arbeitsmaschine ein System zur thermischen Konditionierung der Batterie und/oder der Fahrerkabine mittels einer Wärmepumpe, wobei die Wärmepumpe einen von einem Arbeitsmedium durchströmten Fluidkreislauf mit einem Kompressor, einer ersten Wärmetauschereinheit, einem Expansionsventil, einer zweiten Wärmetauschereinheit und einer ansteuerbaren Ventilanordnung umfasst. Das System bzw. deren Wärmepumpe arbeiten nach dem Prinzip des Wärmepumpenprozesses. Die Ventilanordnung ist dazu vorgesehen und eingerichtet, den Fluidkreislauf wahlweise zwischen einem Betrieb als Heizkreislauf zur Erwärmung der Fahrerkabine und/oder der Batterie und einem Betrieb als Kühlkreislauf zur Abkühlung der Fahrerkabine und/oder der Batterie umzuschalten, wobei beim Betrieb des Fluidkreislaufs als Heizkreislauf die erste Wärmetauschereinheit als Kondensator und die zweite Wärmetauschereinheit als Verdampfer und beim Betrieb des Fluidkreislaufs als Kühlkreislauf die erste Wärmetauschereinheit als Verdampfer und die zweite Wärmetauschereinheit als Kondensator wirken. Mit anderen Worten kann die Ventilanordnung eine Richtung, in der das Arbeitsmedium den Fluidkreislauf der Wärmepumpe durchströmt, umschalten.

Dabei ist es für die Erfindung bedeutsam, dass das Hydrauliksystem thermisch in den Fluidkreislauf eingebunden werden kann, sodass zwischen dem Hydrauliköl und dem Arbeitsmedium Wärmeenergie austauschbar ist. Wie nachstehend gesondert ausgeführt ist, kann das Hydrauliksystem beispielsweise und vorzugsweise über die zweite Wärmetauschereinheit in den Fluidkreislauf eingebunden sein.

Die vorliegende Erfindung zielt darauf ab, eine effektive thermische Konditionierung der Batterie und/oder der Fahrerkabine zu ermöglichen, um die Leistungsfähigkeit der Arbeitsmaschine zu verbessern und den Fahrerkomfort zu erhöhen. Insbesondere bietet die Anmeldung Verbesserungen durch die Verwendung der Wärmepumpe mit dem Fluidkreislauf, der zwischen dem Betrieb als Heizkreislauf und als Kühlkreislauf umgeschaltet werden kann, um die Batterie und die Fahrerkabine je nach Bedarf zu erwärmen oder zu kühlen. Darüber hinaus ermöglicht die Einbindung des Hydrauliksystems in den Fluidkreislauf einen effizienten Wärmeaustausch zwischen dem Hydrauliköl des Hydrauliksystems und dem Arbeitsmedium, um Wärmeenergie des Hydrauliksystems energetisch zu nutzbar zu machen. Dies ist für die Effizienz des Systems besonders vorteilhaft. Im Vergleich zu einer rein elektrischen Heizung für die Batterie und/oder die Fahrerkabine kann die Effizienz verdoppelt bis vervierfacht werden.

Mit anderen Worten bietet die Integration eines Systems zur thermischen Konditionierung mittels einer Wärmepumpe eine effiziente Nutzung der vorhandenen Wärmeenergie (insbesondere der in dem Hydrauliköl gespeicherten Wärmeenergie, die sich beispielsweise aus einer Antriebsstrangverlustleistung speist), indem selbige, die sonst ungenutzt bliebe, zur Temperaturregelung der Batterie und/oder der Fahrerkabine verwendet wird, was die Energieeffizienz der Arbeitsmaschine erhöht.

Durch die Möglichkeit, den Fluidkreislauf zwischen dem Betrieb als Heizkreislauf oder Kühlkreislauf umzuschalten, kann die Arbeitsmaschine flexibel an unterschiedliche klimatische Bedingungen angepasst werden, was den Komfort des Fahrers verbessert und die Leistungsfähigkeit der Batterie unter verschiedenen Temperaturbedingungen optimiert. Insbesondere kann die Temperatur der Batterie zumindest über weite Teile des Betriebs der Arbeitsmaschine, vorzugsweise in allen Situationen, in einem optimalen Temperaturfenster gehalten werden.

Die Einbindung des Hydrauliksystems in den Fluidkreislauf kann im Übrigen zur thermischen Stabilisierung des Hydrauliksystems beitragen, was die Lebensdauer der hydraulischen Komponenten verlängern und die Zuverlässigkeit der Arbeitsmaschine steigern kann.

Diese Erfindung weist ferner den Vorteil auf, dass das System zur thermischen Konditionierung eine geringe Latenz aufweist. Mittels der Wärmepumpe kann die gewünschte Temperatur der Batterie bzw. in der Fahrerkabine schnell erreicht und dort gehalten werden, was zu einer effizienten Nutzung der Arbeitsmaschine führt.

In einer Ausführungsform der landwirtschaftlichen Arbeitsmaschine ist die Ventilanordnung von einem 4/2-Wege-Ventil gebildet. Ein 4/2-Wege-Ventil bietet eine robuste und wartungsarme Lösung für die Umschaltung zwischen Heiz- und Kühlbetrieb, was die Betriebskosten senkt und die Ausfallzeiten der Arbeitsmaschine reduziert.

In einer Ausführungsform der Arbeitsmaschine bindet die Ventilanordnung den Kompressor derart ein, dass das Arbeitsmedium den Fluidkreislauf bei Vorliegen der Ventilanordnung in einer ersten Schaltstellung stromabwärts des Kompressors zum Betrieb des Fluidkreislaufs als Heizkreislauf in einer ersten Richtung und bei Vorliegen der Ventilanordnung in der zweiten Schaltstellung stromabwärts des Kompressors zum Betrieb des Fluidkreislaufs als Kühlkreislauf in einer der ersten Richtung entgegengesetzten zweiten Richtung durchströmt. Entsprechend ist die Ventilanordnung bevorzugt strömungstechnisch zwischen dem Kompressor und den beiden Wärmetauschereinheiten angeordnet. Auf diese Weise kann je nach Schaltstellung der Ventilanordnung das Arbeitsmedium stromabwärts des Kompressors entweder der einen oder der andere Wärmetauschereinheit zugeleitet werden. Hierdurch ergibt sich die Richtung, in der der Fluidkreislauf von dem Arbeitsmedium durchströmt wird. Die eine Richtung führt zum Betrieb des Fluidkreislaufs als Heizkreislauf, die andere Richtung führt zum Betrieb des Fluidkreislaufs als Kühlkreislauf.

Die beschriebene Einbindung der Ventilanordnung stromabwärts des Kompressors trägt mithin zu einer vereinfachten Konstruktion des Gesamtsystems bei, da nur wenige Komponenten für die Umschaltung des Fluidkreislaufs zwischen Heiz- und Kühlbetrieb benötigt werden.

In einer Ausführungsform der Arbeitsmaschine umfasst die erste Wärmetauschereinheit zur thermischen Konditionierung der Batterie einen Batteriewärmetauscher. Der Batteriewärmetauscher ist dazu vorgesehen und eingerichtet, Wärmenergie zwischen dem Arbeitsmedium und einem Batterietemperierungssystem der Batterie auszutauschen. Der Batteriewärmetauscher kann beispielsweise und vorzugsweise von einem Flüssigkeit/Flüssigkeit-Wärmetauscher gebildet sein. Der Wärmetauscher kann beispielsweise und vorzugsweise nach dem Prinzip eines Kreuzstrom- oder Gegenstromwärmetauschers arbeiten. In dieser Ausführungsform umfasst die erste Wärmetauschereinheit ferner zur thermischen Konditionierung der Fahrerkabine einen Kabinenwärmetauscher, mittels dessen Wärmenergie zwischen dem Arbeitsmedium und in der Fahrerkabine befindlicher Kabinenluft austauschbar ist.

Die spezifische Ausgestaltung der ersten Wärmetauschereinheit mit einem Batteriewärmetauscher und einem Kabinenwärmetauscher ermöglicht eine zielgerichtete Temperierung sowohl der Batterie als auch der Fahrerkabine, was die Betriebssicherheit und den Komfort erhöht. In dem Betrieb des Fluidkreislaufs als Heizkreislauf können mittels der ersten Wärmetauschereinheit demzufolge die Batterie und/oder die Kabinenluft der Fahrerkabine erwärmt werden. Der Betrieb als Heizkreislauf ist für Zeiten vorgesehen, in denen kalte Außentemperaturen vorliegen, insbesondere im Winter.

Das "Batterietemperierungssystem" bezeichnet im Sinne der vorliegenden Erfindung ein System, dass für die Temperierung der Batterie verwendet wird. Beispielsweise und vorzugsweise kann das Batterietemperierungssystem über einen eigenen Fluidkreislauf mit einem Wärmeübertragungsfluid verfügen, um Wärmenergie von der Batterie abzuführen oder der Batterie zuzuführen. Ein solches Wärmeübertragungsfluid kann besonders einfach dem Batteriewärmetauscher zugeführt werden, sodass es Wärmeenergie mit dem Arbeitsmedium der Wärmepumpe Wärmeenergie austauschen kann. Mithin ist die Batterie über das Batterietemperierungssystem in den Fluidkreislauf eingebunden.

Die Möglichkeit, Wärmeenergie zwischen dem Arbeitsmedium und einem Batterietemperierungssystem sowie der Kabinenluft auszutauschen, führt zu einer optimierten Temperaturkontrolle, die die Leistung und Lebensdauer der Batterie verbessert und ein angenehmes Arbeitsumfeld für den Bediener schafft.

In einer Ausführungsform der Arbeitsmaschine sind der Batteriewärmetauscher und der Kabinenwärmetauscher parallelgeschaltet. Die Parallelschaltung des Batteriewärmetauschers und des Kabinenwärmetauschers ermöglicht eine effiziente Nutzung der Wärmeenergie, da beide Wärmetauscher gleichzeitig mit Wärmeenergie versorgt werden können bzw. Wärmeenergie von ihnen abgenommen werden kann, was zu einer verbesserten Gesamtenergieeffizienz des Systems führt. Ferner kann durch die parallele Anordnung die Wärmeverteilung flexibel gesteuert werden, um auf unterschiedliche Betriebsanforderungen zu reagieren, was die Anpassungsfähigkeit des Systems an verschiedene Umgebungsbedingungen und Nutzerpräferenzen erhöht. Die Redundanz durch die parallele Konfiguration erhöht zudem die Zuverlässigkeit des Systems, da bei Ausfall eines Wärmetauschers der andere weiterhin funktionieren kann, was die Betriebssicherheit der Arbeitsmaschine erhöht.

Sofern der Batteriewärmetauscher und der Kabinenwärmetauscher parallelgeschaltet sind, umfasst in einer Ausführungsform der Arbeitsmaschine der Fluidkreislauf ein ansteuerbares Verteilventil, das strömungstechnisch zwischen dem Kompressor und der ersten Wärmetauschereinheit angeordnet ist. Das Verteilventil ist dazu vorgesehen und eingerichtet, beim Betrieb des Fluidkreislaufs als Heizkreislauf das Arbeitsmedium stromabwärts des Kompressors wahlweise nur dem Batteriewärmetauscher oder nur dem Kabinenwärmetauscher oder anteilig sowohl dem Batteriewärmetauscher als auch dem Kabinenwärmetauscher zuzuleiten. Das ansteuerbare Verteilventil bietet eine präzise Kontrolle über die Wärmeverteilung, indem es die Möglichkeit bietet, das Arbeitsmedium selektiv zu den verschiedenen Wärmetauschern zu leiten, was eine gezielte Temperaturregelung für Batterie und Fahrerkabine ermöglicht. Die Flexibilität in der Steuerung der Wärmenergie durch das Verteilventil ermöglicht mithin eine optimierte Energieverwaltung, die zu einer längeren Lebensdauer der Batterie und einem erhöhten Komfort in der Fahrerkabine beitragen kann.

In einer Ausführungsform der Arbeitsmaschine umfasst die zweite Wärmetauschereinheit einen Hydraulikwärmetauscher, mittels dessen die thermische Einbindung des Hydrauliksystems in den Fluidkreislauf bewerkstelligt wird. Mittels des Hydraulikwärmetauschers ist Wärmenergie zwischen dem Arbeitsmedium und dem Hydrauliköl austauschbar. Der Hydraulikwärmetauscher kann beispielsweise und vorzugsweise von einem Flüssigkeit/Flüssigkeit-Wärmetauscher gebildet sein. Der Wärmetauscher kann beispielsweise und vorzugsweise nach dem Prinzip eines Kreuzstrom- oder Gegenstromwärmetauschers arbeiten. Die Integration eines Hydraulikwärmetauschers zur thermischen Einbindung des Hydrauliksystems ermöglicht die Rückgewinnung von Wärmeenergie aus dem Hydrauliköl, was zu einer verbesserten Energieeffizienz des Systems führt. Insbesondere kann beim Betrieb des Fluidkreislaufs als Heizkreislauf die Wärmenergie des Hydrauliköls energetisch durch das Wärmepumpenprinzip genutzt werden, um die Fahrerkabine und/oder die Batterie zu erwärmen. Mit anderen Worten kann die Nutzung des Hydraulikwärmetauschers zur Stabilisierung der Temperatur des Systems beitragen, was die Notwendigkeit externer Heiz- oder Kühlelemente reduziert und somit die Betriebskosten senkt. Ebenfalls kann es ein Vorteil sein, dass durch den Wärmeaustausch zwischen Arbeitsmedium und Hydrauliköl eine Betriebstemperatur des Hydrauliksystems optimiert werden kann, was die Leistungsfähigkeit und Lebensdauer der hydraulischen Komponenten erhöht.

In einer Ausführungsform der Arbeitsmaschine umfasst die zweite Wärmetauschereinheit einen Umgebungswärmetauscher, mittels dessen Wärmenergie zwischen dem Arbeitsmedium und Umgebungsluft austauschbar ist. "Umgebungsluft" meint im Sinne der vorliegenden Anmeldung Luft der Umwelt, die die Arbeitsmaschine direkt umgibt. Der Umgebungswärmetauscher ermöglicht den Wärmeaustausch mit der Umgebungsluft, was einen besonders energieeffizienten Betrieb der Wärmepumpe bzw. des Systems ermöglicht. Somit kann bei Betrieb des Fluidkreislaufs als Heizkreislauf Wärmenergie aus der Umgebungsluft entnommen werden (die zweite Wärmetauschereinheit wirkt als Verdampfer) und beim Betrieb des Fluidkreislaufs als Kühlkreislauf Wärmenergie an die Umgebungsluft abgegeben werden (zweite Wärmetauschereinheit wirkt als Kondensator). Hierdurch kann das System besonders kosteneffizient und umweltfreundlich betrieben werden. Die Verwendung eines Umgebungswärmetauschers kann zudem die Abhängigkeit von mechanischen Kühlkomponenten verringern, was zu einer Reduzierung von Wartungsanforderungen und einer Verlängerung der Betriebsdauer der Arbeitsmaschine führt.

In einer Ausführungsform der Arbeitsmaschine sind der Hydraulikwärmetauscher und der Umgebungswärmetauscher parallelgeschaltet. Die Parallelschaltung des Batteriewärmetauschers und des Kabinenwärmetauschers ermöglicht eine effiziente Nutzung der Wärmeenergie, da beide Wärmetauscher gleichzeitig mit Wärmeenergie versorgt werden können bzw. Wärmeenergie von ihnen abgenommen werden kann, was zu einer verbesserten Gesamtenergieeffizienz des Systems führt. Ferner kann durch die parallele Anordnung die Wärmeverteilung flexibel gesteuert werden, um auf unterschiedliche Betriebsanforderungen zu reagieren, was die Anpassungsfähigkeit des Systems an verschiedene Umgebungsbedingungen und Nutzerpräferenzen erhöht. Beispielsweise und vorzugsweise kann je nach Betrieb des Fluidkreislaufs (als Heizkreislauf oder als Kühlkreislauf) nur einer der beiden Wärmetauscher der zweiten Wärmetauschereinheit oder beide Wärmetauscher mit dem Arbeitsmedium beschickt werden. Beispielsweise und vorzugsweise werden beim Betrieb des Fluidkreislaufs als Heizkreislauf beide Wärmetauscher (Hydraulik- und Umgebungswärmetauscher) mit dem Arbeitsfluid beschickt, sodass sie Wärmenergie aus dem Hydrauliköl und der Umgebungsluft für die Erwärmung der Kabinenluft der Fahrerkabine und der Batterie entnehmen können. Beim Betrieb des Fluidkreislaufs als Kühlkreislauf kann beispielsweise und vorzugsweise nur der Umgebungswärmetauscher mit dem Arbeitsmedium beschickt werden, damit Wärmenergie von dem Arbeitsmedium an die Umgebungsluft abgegeben werden kann. Eine Abgabe von Wärmenergie an das Hydrauliköl ist in aller Regel nicht gewünscht.

Die Redundanz durch die parallele Konfiguration von Hydraulik- und Umgebungswärmetauscher erhöht zudem die Zuverlässigkeit des Systems, da bei Ausfall eines Wärmetauschers der andere weiterhin funktionieren kann, was die Betriebssicherheit der Arbeitsmaschine erhöht. Die Parallelschaltung des Hydraulikwärmetauschers und des Umgebungswärmetauschers ermöglicht eine effiziente Nutzung der Wärmeübertragungskapazitäten, wodurch die thermische Leistung des Systems optimiert werden kann. Durch die parallele Anordnung können beide Wärmetauscher gleichzeitig betrieben werden, was zu einer schnelleren Anpassung der Temperatur des Arbeitsmediums führt und somit die Reaktionszeit des Systems auf wechselnde Betriebsbedingungen verkürzt.

Sofern der Hydraulikwärmetauscher und der Umgebungswärmetauscher parallelgeschaltet sind, umfasst in einer Ausführungsform der Arbeitsmaschine der Fluidkreislauf ein ansteuerbares Verteilventil, das strömungstechnisch zwischen den beiden Wärmetauschereinheiten angeordnet ist. Das Verteilventil ist dazu vorgesehen und eingerichtet, beim Betrieb des Fluidkreislaufs als Heizkreislauf das Arbeitsmedium stromabwärts der ersten Wärmetauschereinheit wahlweise nur dem Hydraulikwärmetauscher oder nur dem Umgebungswärmetauscher oder anteilig sowohl dem Hydraulikwärmetauscher als auch dem Umgebungswärmetauscher zuzuleiten. Das ansteuerbare Verteilventil bietet die Möglichkeit den Fluss von Wärmenergie an die beiden Wärmetauscher flexibel zu steuern. Hierdurch kann die Effizienz des Heizkreislaufs verbessert werden. Mithin bietet die Möglichkeit, das Arbeitsmedium selektiv durch einen oder beide Wärmetauscher zu leiten eine bedarfsgerechte Übertragung der Wärmenergie, die den Energieverbrauch minimiert und die Betriebskosten senkt.

Sofern der Fluidkreislauf das Verteilventil umfasst, ist dieses in einer Ausführungsform der Arbeitsmaschine dazu vorgesehen und eingerichtet, beim Betrieb des Fluidkreislaufs als Kühlkreislauf das Arbeitsmedium stromabwärts der zweiten Wärmetauschereinheit wahlweise nur dem Batteriewärmetauscher oder nur dem Kabinenwärmetauscher oder anteilig sowohl dem Batteriewärmetauscher als auch dem Kabinenwärmetauscher zuzuleiten. Die selektive Zuleitung des Arbeitsmediums zu den genannten Wärmetauschern ermöglicht eine individuelle Abnahme von Wärmenergie von der Fahrerkabine und der Batterie, wodurch der Komfort und die Sicherheit der Fahrerkabine sowie die Leistung und Lebensdauer der Batterie verbessert werden. Die anteilige Verteilung des Arbeitsmediums zu beiden Wärmetauschern erlaubt überdies eine simultane Kühlung von Batterie und Fahrerkabine.

In einer Ausführungsform der Arbeitsmaschine ist das strömungstechnisch zwischen den beiden Wärmetauschereinheiten angeordnete Verteilventil von dem Expansionsventil gebildet ist. In beiden Betriebsweisen des Fluidkreislaufs (als Heizkreislauf oder als Kühlkreislauf) befindet sich das Expansionsventil zwischen den beiden Wärmetauschereinheiten. Dasselbe gilt für das genannte Verteilventil. Entsprechend ist es zur Reduktion der Bauteile des Systems von Vorteil, die Verteilfunktion des Verteilventils in das Expansionsventil zu integrieren, sodass das Verteilventil und das Expansionsventil von demselben Bauteil gebildet sind. Mit anderen Worten hat das Expansionsventil des Fluidkreislaufs bei dieser Ausgestaltung eine Doppelfunktion, nämlich die Funktion als Expansionsventil und die Funktion als Verteilventil gemäß vorstehender Erläuterung. Die Verwendung des Expansionsventils als Verteilventil reduziert mithin die Anzahl der benötigten Komponenten, was zu einer Kostenersparnis bei der Herstellung und Wartung der Arbeitsmaschine führt. Ferner vereinfacht die Integration der Funktion des Verteilventils in das Expansionsventil die Architektur des Systems und spart Bauraum. Schließlich kann die Kombination von Expansions- und Verteilventil in einem Bauteil die Zuverlässigkeit des Systems erhöhen, da weniger Schnittstellen und Verbindungen die Wahrscheinlichkeit von Leckagen oder Defekten verringern.

In einer Ausführungsform der Arbeitsmaschine verfügt diese über eine Schnittstelle zum Anschluss eines Hydrauliksystems eines Anbaugeräts, beispielsweise einer Ballenpresse oder einer Sämaschine. Über diese Schnittstelle ist eine Einbindung des Hydrauliksystems in den Fluidkreislauf der Wärmepumpe möglich, sodass Wärmenergie des Anbaugeräts über ein Hydrauliköl von dem Anbaugerät für das System zur thermischen Konditionierung nutzbar gemacht werden kann. Hierüber ist ein weiterer Effizienzgewinn möglich. Zur Einbindung des Hydrauliksystems des Anbaugeräts kann die zweite Wärmetauschereinheit beispielsweise über einen weiteren Hydraulikwärmetauscher verfügen. Ebenfalls ist es denkbar, den Hydraulikwärmetauscher zur Einbindung des Hydrauliksystems der Arbeitsmaschine derart auszugestalten, dass ein weiteres Hydrauliksystem strömungstechnisch eingebunden werden kann.

In einer Ausführungsform der Arbeitsmaschine ist ein Hauptantriebsmotor der Arbeitsmaschine von einem Elektromotor gebildet. Vorzugsweise ist die Arbeitsmaschine ohne Verbrennungsmotor ausgeführt. Die Verwendung eines Elektromotors als Hauptantriebsmotor reduziert die Emissionen von Schadstoffen und Treibhausgasen, was zu einer umweltfreundlicheren Betriebsweise führt. Elektrische Antriebssysteme bieten eine höhere Energieeffizienz im Vergleich zu herkömmlichen Verbrennungsmotoren, was zu einer Verringerung des Energieverbrauchs und Betriebskosten führt. Die Wartungsanforderungen und -kosten können durch den Wegfall eines Verbrennungsmotors und dessen peripherer Systeme wie Kraftstoffversorgung und Abgasnachbehandlung reduziert werden.

Die zugrunde liegende Aufgabe wird ferner mittels eines Verfahrens mit den Merkmalen des Anspruchs 14 gelöst. Vorteilhafte Ausgestaltungen ergeben sich aus den zugehörigen Unteransprüchen sowie der Beschreibung.

Das Verfahren dient dem Betrieb der erfindungsgemäßen Arbeitsmaschine nach einem der Ansprüche 1 bis 13. Das Verfahren sieht vor, dass der Fluidkreislauf mittels der Ventilanordnung wahlweise zwischen dem Betrieb als Heizkreislauf und dem Betrieb als Kühlkreislauf umgeschaltet wird, wobei beim Betrieb des Fluidkreislaufs als Heizkreislauf mittels der ersten Wärmetauschereinheit zur thermischen Konditionierung der Batterie Wärmeenergie von dem Arbeitsmedium auf ein Batterietemperierungssystem und/oder zur thermischen Konditionierung der Fahrerkabine Wärmenergie von dem Arbeitsmedium auf in der Fahrerkabine befindliche Kabinenluft übertragen wird, wodurch das Arbeitsmedium kondensiert, und mittels der zweiten Wärmetauschereinheit Wärmeenergie von dem Hydrauliköl auf das Arbeitsmedium übertragen wird, wodurch das Arbeitsmedium verdampft. Die erste Wärmetauschereinheit wirkt mithin als bei diesem Betrieb des Fluidkreislaufs als Kondensator und die zweite Wärmetauschereinheit als Verdampfer. Bei dem Betrieb des Fluidkreislaufs als Heizkreislauf wird demzufolge der Fluidkreislauf in folgender Reihenfolge (beginnend und endend beim Kompressor) von dem Arbeitsmedium durchströmt: Kompressor - erste Wärmetauschereinheit (als Kondensator) - Expansionsventil - zweite Wärmetauschereinheit (als Verdampfer) - Kompressor. Bei dem Betrieb des Fluidkreislaufs als Kühlkreislauf wird der Fluidkreislauf in folgender Reihenfolge (beginnend und endend beim Kompressor) von dem Arbeitsmedium durchströmt: Kompressor - zweite Wärmetauschereinheit (als Kondensator) - Expansionsventil - erste Wärmetauschereinheit (als Verdampfer) - Kompressor. Gemäß vorstehender Beschreibung ist die Ventilanordnung zum Umschalten zwischen den beiden Betriebsweisen des Fluidkreislaufs bevorzugt stromabwärts des Kompressors sowie derart vor den beiden Wärmetauschereinheiten angeordnet, dass das Arbeitsmedium ausgehend von der Ventilanordnung wahlweise der ersten oder der zweiten Wärmetauschereinheit zugeleitet wird. Entsprechend kann die Richtung, in der das Arbeitsmedium den Fluidkreislauf durchströmt, besonders einfach mittels einer Umschaltung der Ventilanordnung zwischen einer ersten Schaltstellung und einer zweiten Schaltstellung geändert werden (und mit ihr die Betriebsweise des Fluidkreislaufs).

Die sich durch das Verfahren ergeben Vorteile ergeben sich analog zu den vorstehend bereits beschriebenen Vorteilen der erfindungsgemäßen Arbeitsmaschine. Insbesondere kann die Temperierung der Batterie und/oder der Fahrerkabine besonders energieeffizient und zuverlässig vorgenommen werden. Die Umschaltbarkeit des Fluidkreislaufs ermöglicht eine flexible Nutzung als Heiz- oder Kühlkreislauf, was die Anpassungsfähigkeit an unterschiedliche Betriebsbedingungen und Umgebungstemperaturen verbessert. Die thermische Konditionierung der Batterie durch Wärmeübertragung vom Arbeitsmedium erhöht die Leistungsfähigkeit und Lebensdauer der Batterie, insbesondere unter extremen Temperaturbedingungen. Die Nutzung der Wärmeenergie (insbesondere des Hydrauliköls) zur Konditionierung der Fahrerkabine steigert den Komfort des Fahrers und kann die notwendige Leistungsfähigkeit eines separaten Heizsystems reduzieren, was zu einer Gewichts- und Kostenersparnis führt. Bestenfalls kann auf ein separates Heizsystem für die Fahrerkabine vollständig verzichtet werden.

In einer Ausführungsform des Verfahrens wird beim Betrieb des Fluidkreislaufs als Kühlkreislauf mittels der ersten Wärmetauschereinheit zur thermischen Konditionierung der Batterie Wärmeenergie von dem Batterietemperierungssystem auf das Arbeitsmedium und/oder zur thermischen Konditionierung der Fahrerkabine Wärmenergie von der Kabinenluft auf das Arbeitsmedium übertragen. Hierdurch wird das Arbeitsmedium verdampft. Die erste Wärmetauschereinheit wirkt entsprechend bei diesem Betrieb des Fluidkreislaufs als Verdampfer. Die effiziente Abführung von Wärmeenergie von der Batterie und/oder der Fahrerkabine während des Betriebs des Fluidkreislaufs als Kühlkreislauf verhindert Überhitzung und trägt zur Aufrechterhaltung optimaler Betriebstemperaturen bei. Insbesondere die Temperatur der Batterie kann hierdurch in einem optimalen Fenster gehalten werden, wodurch diese optimal arbeitet und möglichst wenig altert.

In einer Ausführungsform des Verfahrens wird beim Betrieb des Fluidkreislaufs als Kühlkreislauf mittels der zweiten Wärmetauschereinheit Wärmeenergie von dem Arbeitsmedium auf die Arbeitsmaschine umgebende Umgebungsluft übertragen. Hierbei wirkt die zweite Wärmetauschereinheit als Kondensator. Die Übertragung von Wärmeenergie auf die umgebende Umgebungsluft ermöglicht eine effiziente Dissipation von überschüssiger Wärme, was die thermische Stabilität des Systems sicherstellt. Die Kondensation des Arbeitsmediums durch Abgabe von Wärme an die Umgebungsluft ermöglicht einen kontinuierlichen Betrieb des Fluidkreislaufs im Betrieb als Kühlkreislauf ohne die Notwendigkeit externer Kühlressourcen. Die Fähigkeit, das Arbeitsmedium durch Umgebungsluft zu kondensieren, kann die Notwendigkeit eines zusätzlichen Kühlers reduzieren, was zu einer kompakteren Bauweise der Arbeitsmaschine führt.

Die Erfindung ist nachstehend anhand eines Ausführungsbeispiels, das in den Figuren dargestellt ist, näher erläutert. Es zeigt:
- Fig. 1:: Eine Seitenansicht einer landwirtschaftlichen Arbeitsmaschine;
- Fig. 2:: Eine schematische Ansicht eines in einem ersten Betriebszustand befindlichen Systems zur thermischen Konditionierung einer Batterie und einer Fahrerkabine der landwirtschaftlichen Arbeitsmaschine aus Figur 1;
- Fig. 3:: eine schematische Ansicht eines in einem zweiten Betriebszustand befindlichen Systems zur thermischen Konditionierung einer Batterie und einer Fahrerkabine der landwirtschaftlichen Arbeitsmaschine aus Figur 1.

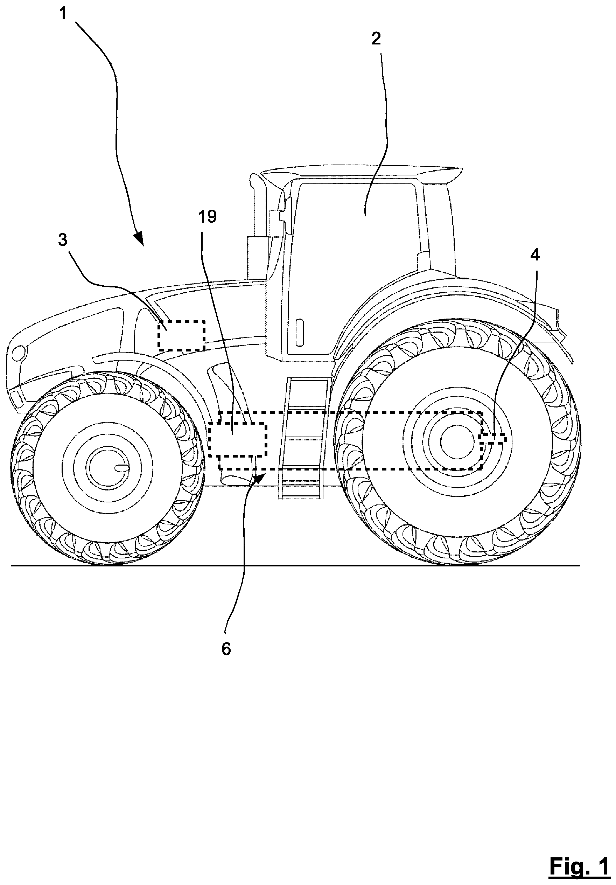

Ein Ausführungsbeispiel, da in den **Figuren 1 bis 3** gezeigt ist, umfasst eine landwirtschaftliche Arbeitsmaschine **1,** die hier als Traktor ausgebildet ist. Die Arbeitsmaschine **1** umfasst eine Fahrerkabine **2.** Ferner umfasst sie eine Batterie **3,** die zur Vorhaltung und Bereitstellung elektrischer Energie vorhanden ist. In dem gezeigten Beispiel ist ein in den Figuren nicht dargestellter Hauptantriebsmotor der Arbeitsmaschine **1** von einem Elektromotor gebildet. Die Arbeitsmaschine **1** weist keinen Verbrennungsmotor auf. Die Batterie ist von einer Lithium-Ionen-Batterie gebildet. Diese weist hier und vorzugsweise eine elektrische Speicherkapazität von 120 kWh auf. Ein Arbeitsorgan **4,** das hier von einer Zapfwelle (PTO) gebildet ist, ist zur Anwendung im Rahmen der Erledigung eines landwirtschaftlichen Arbeitsauftrags vorgesehen. Die Arbeitsmaschine **1** umfasst ein mit Hydrauliköl arbeitendes Hydrauliksystem **5** zum Betrieb des Arbeitsorgans **4.** Weiterhin ist eine Hydraulikpumpe **19** dargestellt, die Teil des Hydrauliksystems **5** ist. Das Hydrauliksystem **5** kann ferner vorzugsweise über einen Öltank zur Vorhaltung des Hydrauliköls verfügen.

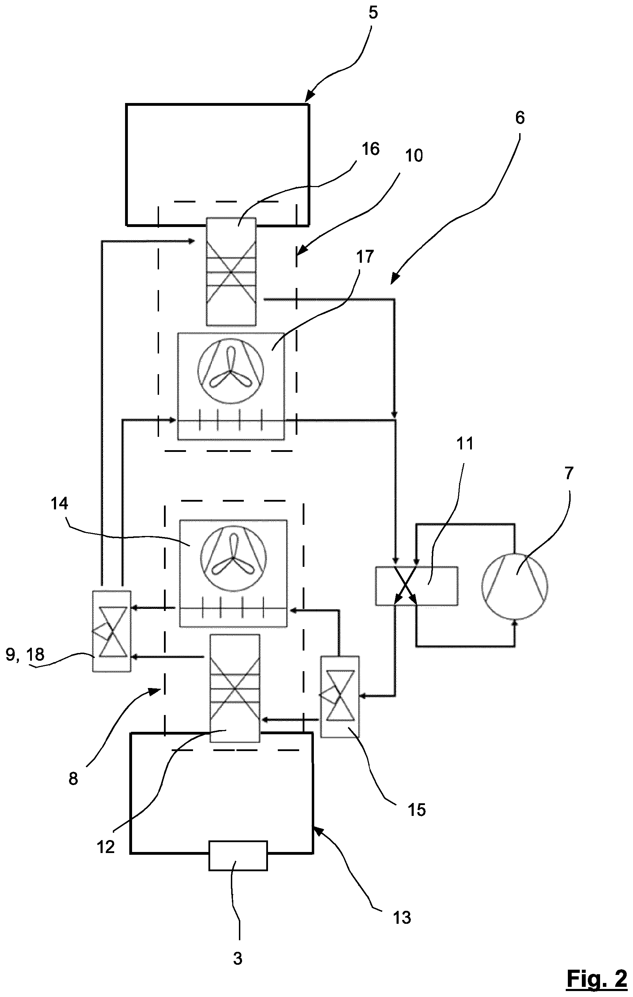

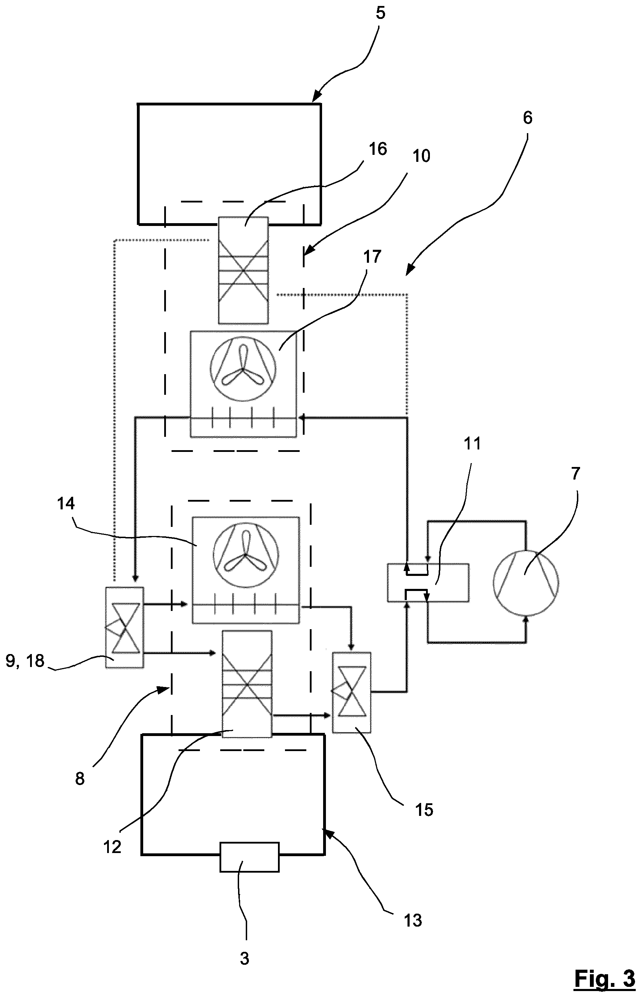

Die landwirtschaftliche Arbeitsmaschine **1** ist mit einem in **Figur 1** nicht dargestellten System zur thermischen Konditionierung der Batterie **3** und/oder der Fahrerkabine **2** mittels einer Wärmepumpe **6** ausgestattet. Wie sich aus den **Figuren 2** **und** **3** ergibt, umfasst die Wärmepumpe **6** einen von einem Arbeitsmedium durchströmten Fluidkreislauf mit einem Kompressor **7,** einer ersten Wärmetauschereinheit **8,** einem Expansionsventil **9,** einer zweiten Wärmetauschereinheit **10** und einer ansteuerbaren Ventilanordnung **11.** Die Ventilanordnung **11** erlaubt es, den Fluidkreislauf wahlweise zwischen einem Betrieb als Heizkreislauf zur Erwärmung der Fahrerkabine **2** und/oder der Batterie **3** und einem Betrieb als Kühlkreislauf zur Abkühlung der Fahrerkabine **2** und/oder der Batterie **3** umzuschalten.

Die Ventilanordnung **11** ist hier und vorzugsweise von einem **4/2**-Wege-Ventil gebildet. Mithin ist es zwischen zwei Schaltstellung umschaltbar. Bei Vorliegen in der ersten Schaltstellung wird der Fluidkreislauf als Heizkreislauf betrieben. Hierbei wirken die erste Wärmetauschereinheit **8** als Kondensator und die zweite Wärmetauschereinheit **10** als Verdampfer. Zum Umschalten zu dem Betrieb als Kühlkreislauf wird die Ventilanordnung **11** in ihre zweite Schaltstellung umgeschaltet. Beim Betrieb des Fluidkreislaufs als Kühlkreislauf wirkt die erste Wärmetauschereinheit **8** als Verdampfer und die zweite Wärmetauschereinheit **10** als Kondensator. Je nach Betriebsweise des Fluidkreislaufs wird selbiger in entgegengesetzte Richtungen von dem Arbeitsmedium durchströmt. Hier und vorzugsweise ist die Ventilanordnung **11** derart strömungstechnisch mit dem Kompressor **7** verschaltet, dass bei dem Betrieb des Fluidkreislaufs als Heizkreislauf (erste Schaltstellung der Ventilanordnung **11**) das Arbeitsmedium ausgehend von dem Kompressor **7** zuerst zu der ersten Wärmetauschereinheit **8,** sodann zu dem Expansionsventil **9** und schließlich zu der zweiten Wärmetauschereinheit **10** strömt, bevor es wieder zu dem Kompressor **7** gelangt. Beim Betrieb des Fluidkreislaufs als Kühlkreislauf (zweite Schaltstellung der Ventilanordnung **11**) strömt das Arbeitsmedium ausgehend von dem Kompressor **7** zuerst zu der zweiten Wärmetauschereinheit **10,** sodann zu dem Expansionsventil **9** und schließlich zu der ersten Wärmetauschereinheit 8, bevor es wieder zu dem Kompressor **7** gelangt.

Das Hydrauliksystem **5** ist thermisch in den Fluidkreislauf eingebunden werden, sodass zwischen dem Hydrauliköl und dem Arbeitsmedium Wärmeenergie austauschbar ist.

**Figur 2** zeigt das System zur thermischen Konditionierung der Batterie **3** und/oder der Fahrerkabine **2** mittels einer Wärmepumpe **6.** Das System umfasst den beschriebenen Fluidkreislauf, durch den ein Arbeitsmedium strömt. Die erste Wärmetauschereinheit **8** umfasst hier und vorzugsweise einen Batteriewärmetauscher **12** und einen Kabinenwärmetauscher **14,** die zueinander parallelgeschaltet sind. Der Batteriewärmetauscher **12** ist hier und vorzugsweise von einem Flüssigkeit/Flüssigkeit-Wärmetauscher gebildet, da nach dem Gegenstromprinzip arbeitet. Der Kabinenwärmetauscher **14** ist hier und vorzugsweise von einem Luft/Flüssigkeit-Wärmetauscher gebildet, der nach dem Kreuzstromprinzip arbeitet. Der Batteriewärmetauscher **12** ermöglicht den Wärmeaustausch zwischen dem Arbeitsmedium und einem Batterietemperierungssystem **13,** das der Batterie **3** zugeordnet ist und für die Temperierung der Batterie 3 sorgt. Das Batterietemperierungssystem **13** verfügt über ein Wärmeübertragungsfluid, das für eine Übertragung von Wärmenergie zwischen dem Batteriewärmetauscher **12** und der Batterie **3** sorgt. Der Kabinenwärmetauscher **14** ermöglicht den Wärmeaustausch zwischen dem Arbeitsmedium und in der Fahrerkabine **2** befindlicher Kabinenluft.

Die zweite Wärmetauschereinheit **10** umfasst hier und vorzugsweise einen Hydraulikwärmetauscher **16** und einen Umgebungswärmetauscher **17.** Der Hydraulikwärmetauscher **16** ermöglicht den Wärmeaustausch zwischen dem Arbeitsmedium und dem Hydrauliköl des Hydrauliksystems **5.** Hier und vorzugsweise ist der Hydraulikwärmetauscher **16** von einem Flüssigkeit/Flüssigkeit-Wärmetauscher gebildet, der nach dem Gegenstromprinzip arbeitet. Der Hydraulikkreislauf **5** ist in dem gezeigten Beispiel mittels des Hydraulikwärmetauschers **16** in den Fluidkreislauf derart eingebunden, dass ein Austausch von Wärmenergie zwischen dem Hydrauliköl und dem Arbeitsmedium möglich ist. Der Umgebungswärmetauscher **17** ermöglicht den Wärmeaustausch zwischen dem Arbeitsmedium und Umgebungsluft, die die Arbeitsmaschine **1** umgibt. Er ist hier und vorzugsweise von einem Luft/Flüssigkeit-Wärmetauscher gebildet, der nach dem Gegenstromprinzip arbeitet.

Der Fluidkreislauf umfasst hier und vorzugsweise zwei separate, ansteuerbare Verteilventile **15, 18,** die an unterschiedlichen Positionen in den Fluidkreislauf eingebunden sind. Das erste ansteuerbare Verteilventil **15** ist strömungstechnisch zwischen dem Kompressor **7** und der ersten Wärmetauschereinheit **8** angeordnet. Dieses erste Verteilventil **15** erlaubt es, beim Betrieb des Fluidkreislaufs als Heizkreislauf (erste Schaltstellung der Ventilanordnung **11;** das Arbeitsmedium zirkuliert wie in **Figur 2** gezeigt im Uhrzeigersinn) das Arbeitsmedium wahlweise nur dem Batteriewärmetauscher **12** oder nur dem Kabinenwärmetauscher **14** oder anteilig sowohl dem Batteriewärmetauscher **12** als auch dem Kabinenwärmetauscher **14** zuzuleiten.

Das zweite ansteuerbare Verteilventil **18** ist strömungstechnisch zwischen den beiden Wärmetauschereinheiten **8, 10** angeordnet. Dieses zweite Verteilventil **18** erlaubt es, beim Betrieb des Fluidkreislaufs als Heizkreislauf das Arbeitsmedium wahlweise nur dem Hydraulikwärmetauscher **16** oder nur dem Umgebungswärmetauscher **17** oder anteilig sowohl dem Hydraulikwärmetauscher **16** als auch dem Umgebungswärmetauscher **17** zuzuleiten. Beim Betrieb des Fluidkreislaufs als Kühlkreislauf (zweite Schaltstellung der Ventilanordnung; das Arbeitsmedium zirkuliert mit Bezug wie in **Figur 3** gezeigt gegen den Uhrzeigersinn) erlaubt es das zweite Verteilventil **18,** das Arbeitsmedium wahlweise nur dem Batteriewärmetauscher **12** oder nur dem Kabinenwärmetauscher **14** oder anteilig sowohl dem Batteriewärmetauscher **12** als auch dem Kabinenwärmetauscher **14** zuzuleiten.

Hier und vorzugsweise ist das zweite Verteilventil **18** von dem Expansionsventil **9** gebildet, das demzufolge eine Doppelfunktion erfüllt.

Mit Blick auf den Betriebszustand des Systems der landwirtschaftlichen Arbeitsmaschine **1,** der in **Figur 2** veranschaulicht ist, läuft, wenn das System zur thermischen Konditionierung eingeschaltet wird, der folgende Prozess ab (Betrieb des Fluidkreislaufs als Heizkreislauf; Ventilanordnung **11** befindet sich in ihrer ersten Schaltstellung):

Der Kompressor **7** komprimiert das Arbeitsmedium, wodurch dessen Temperatur und Druck ansteigen. Die ansteuerbare Ventilanordnung **11** liegt in ihrer ersten Schaltstellung vor, sodass sie das heiße, komprimierte Arbeitsmedium in Richtung der ersten Wärmetauschereinheit **8** lenkt. Das Arbeitsmedium strömt durch die erste Wärmetauschereinheit **8,** wobei hier und vorzugsweise das erste Verteilventil **15** so eingestellt ist, dass sowohl der Batteriewärmetauscher **12** als auch der Kabinenwärmetauscher **14** mit dem Arbeitsmedium beschickt und von diesem durchströmt werden. Hier wird Wärmeenergie von dem Arbeitsmedium anteilig auf das Batterietemperierungssystem **13** und auf die Kabinenluft in der Fahrerkabine **2** übertragen. Infolge der Abgabe von Wärmenergie wird das Arbeitsmedium kondensiert. Die erste Wärmetauschereinheit **8** wirkt in dem Fluidkreislauf als Kondensator. Nachdem das Arbeitsmedium Wärmeenergie abgegeben hat und abgekühlt ist, passiert es das Expansionsventil **9,** wobei sein Druck und seine Temperatur weiter sinken. Infolge des Rückgangs des Drucks wird das Arbeitsmedium im gezeigten Beispiel teilweise verdampft. Es liegt stromabwärts des Expansionsventils **9** gemischt teilweise im flüssigen und teilweise im gasförmigen Aggregatzustand vor. Das abgekühlte und expandierte Arbeitsmedium strömt nun durch die zweite Wärmetauschereinheit **10.** Hier und vorzugsweise ist das zweite Verteilventil **18,** das von dem Expansionsventil **9** gebildet ist, derart eingestellt, dass das Arbeitsmedium sowohl den Hydraulikwärmetauscher **16** als auch zu dem Umgebungswärmetauscher **17** durchströmt. Im Hydraulikwärmetauscher **16** nimmt das Arbeitsmedium Wärmeenergie vom Hydrauliköl des Hydraulikkreislaufs **5** auf. Im Umgebungswärmetauscher **17** nimmt das Arbeitsmedium Wärmeenergie aus der Umgebungsluft auf, die die Arbeitsmaschine **1** umgibt. Die Aufnahme von Wärmeenergie führt dazu, dass das Arbeitsmedium verdampft wird. Die zweite Wärmetauschereinheit **10** wirkt demzufolge als Verdampfer des Fluidkreislaufs. Schließlich kehrt das Arbeitsmedium, das nun wieder erwärmt und verdampft wurde, zum Kompressor **7** zurück, um den Kreislauf von Neuem zu beginnen.

Dieser Prozess erlaubt es dem System, die Batterie **3** und/oder die Fahrerkabine **2** zu heizen, wobei insbesondere Wärmenergie des Hydrauliköls zum Betrieb der Wärmepumpe **6** genutzt werden kann.

Mit Blick auf den Betriebszustand des Systems der landwirtschaftlichen Arbeitsmaschine **1,** der in **Figur 3** veranschaulicht ist, läuft, wenn das System zur thermischen Konditionierung eingeschaltet wird, der folgende Prozess ab (Betrieb des Fluidkreislaufs als Kühlkreislauf; Ventilanordnung **11** befindet sich in ihrer zweiten Schaltstellung):

Der Kompressor **7** komprimiert das Arbeitsmedium, wodurch dessen Temperatur und Druck ansteigen. Die ansteuerbare Ventilanordnung **11** liegt in ihrer zweiten Schaltstellung vor, sodass sie das heiße, komprimierte Arbeitsmedium in Richtung der zweiten Wärmetauschereinheit **10** lenkt. Das Arbeitsmedium strömt durch die zweite Wärmetauschereinheit **10,** wobei hier und vorzugsweise der Hydraulikwärmetauscher **16** hydraulisch versperrt ist, sodass das Arbeitsmedium diesen nicht durchströmen kann. Stattdessen durchströmt das Arbeitsmedium hier und vorzugsweise ausschließlich den Umgebungswärmetauscher **17.** Mittels des Umgebungswärmetauschers **17** wird Wärmeenergie von dem Arbeitsmedium auf die Umgebungsluft abgegeben. Infolge der Abgabe von Wärmenergie wird das Arbeitsmedium kondensiert. Die zweite Wärmetauschereinheit **10** wirkt in dem Fluidkreislauf folglich als Kondensator. Nachdem das Arbeitsmedium Wärmeenergie abgegeben hat und abgekühlt ist, passiert es das Expansionsventil **9,** wobei sein Druck und seine Temperatur weiter sinken. Infolge des Rückgangs des Drucks wird das Arbeitsmedium im gezeigten Beispiel teilweise verdampft. Es liegt stromabwärts des Expansionsventils **9** gemischt teilweise im flüssigen und teilweise im gasförmigen Aggregatzustand vor. Das abgekühlte und expandierte Arbeitsmedium strömt nun durch die erste Wärmetauschereinheit **8.** Hier und vorzugsweise ist das zweite Verteilventil **18** (bzw. das Expansionsventil **9** in Wahrnehmung seiner Funktion als zweites Verteilventil **18**) so eingestellt, dass das Arbeitsmedium sowohl dem Batteriewärmetauscher **12** als auch dem Kabinenwärmetauscher **14** zugeleitet wird und diese durchströmt. Im Batteriewärmetauscher **12** nimmt das Arbeitsmedium Wärmeenergie von dem Batterietemperierungssystem **13** auf (hier: von einem Wärmeübertragungsfluid, das in dem Batterietemperierungssystem **13** zirkuliert). Im Kabinenwärmetauscher **14** nimmt das Arbeitsmedium Wärmeenergie aus der Kabinenluft auf, die sich in der Fahrerkabine **2** befindet. Die Aufnahme von Wärmeenergie führt dazu, dass das Arbeitsmedium verdampft wird. Die erste Wärmetauschereinheit **8** wirkt demzufolge als Verdampfer des Fluidkreislaufs. Schließlich kehrt das Arbeitsmedium, das nun wieder erwärmt und verdampft wurde, zum Kompressor **7** zurück, um den Kreislauf von Neuem zu beginnen.

### Bezugszeichenliste

- 1: Landwirtschaftliche Arbeitsmaschine
- 2: Fahrerkabine
- 3: Batterie
- 4: Arbeitsorgan
- 5: Hydrauliksystem
- 6: Wärmepumpe
- 7: Kompressor
- 8: erste Wärmetauschereinheit
- 9: Expansionsventil
- 10: zweite Wärmetauschereinheit
- 11: Ventilanordnung
- 12: Batteriewärmetauscher
- 13: Batterietemperierungssystem
- 14: Kabinenwärmetauscher
- 15: Verteilventil
- 16: Hydraulikwärmetauscher
- 17: Umgebungswärmetauscher
- 18: Verteilventil
- 19: Hydraulikpumpe

## Patentansprüche

1. Landwirtschaftliche Arbeitsmaschine (1), insbesondere Traktor, umfassend
- eine Fahrerkabine (2),
- eine Batterie (3) zur Vorhaltung und Bereitstellung elektrischer Energie,
- mindestens ein Arbeitsorgan (4) zur Anwendung im Rahmen der Erledigung eines landwirtschaftlichen Arbeitsauftrags,
- mindestens ein mit Hydrauliköl arbeitendes Hydrauliksystem (5) zum Betrieb des mindestens einen Arbeitsorgans (4),
**gekennzeichnet durch**
ein System zur thermischen Konditionierung der Batterie (3) und/oder der Fahrerkabine (2) mittels einer Wärmepumpe (6),
wobei die Wärmepumpe (6) einen von einem Arbeitsmedium durchströmten Fluidkreislauf mit einem Kompressor (7), einer ersten Wärmetauschereinheit (8), einem Expansionsventil (9), einer zweiten Wärmetauschereinheit (10) und einer ansteuerbaren Ventilanordnung (11) umfasst,
wobei die Ventilanordnung (11) es erlaubt, den Fluidkreislauf wahlweise zwischen einem Betrieb als Heizkreislauf zur Erwärmung der Fahrerkabine (2) und/oder der Batterie (3) und einem Betrieb als Kühlkreislauf zur Abkühlung der Fahrerkabine (2) und/oder der Batterie (3) umzuschalten,
wobei beim Betrieb des Fluidkreislaufs als Heizkreislauf die erste Wärmetauschereinheit (8) als Kondensator und die zweite Wärmetauschereinheit (10) als Verdampfer und beim Betrieb des Fluidkreislaufs als Kühlkreislauf die erste Wärmetauschereinheit (8) als Verdampfer und die zweite Wärmetauschereinheit (10) als Kondensator wirken,
wobei das Hydrauliksystem (5) derart thermisch in den Fluidkreislauf eingebunden werden kann, dass zwischen dem Hydrauliköl und dem Arbeitsmedium Wärmeenergie austauschbar ist.

2. Landwirtschaftliche Arbeitsmaschine (1) nach Anspruch 1, **dadurch gekennzeichnet, dass** die Ventilanordnung (11) von einem 4/2-Wege-Ventil gebildet ist.

3. Landwirtschaftliche Arbeitsmaschine (1) nach einem der vorhergehenden Ansprüche, **dadurch gekennzeichnet, dass** die Ventilanordnung (11) den Kompressor (7) derart einbindet, dass das Arbeitsmedium den Fluidkreislauf bei Vorliegen der Ventilanordnung (11) in einer ersten Schaltstellung stromabwärts des Kompressors (7) zum Betrieb des Fluidkreislaufs als Heizkreislauf in einer ersten Richtung und bei Vorliegen der Ventilanordnung (11) in der zweiten Schaltstellung stromabwärts des Kompressors (7) zum Betrieb des Fluidkreislaufs als Kühlkreislauf in einer der ersten Richtung entgegengesetzten zweiten Richtung durchströmt.

4. Landwirtschaftliche Arbeitsmaschine (1) nach einem der vorhergehenden Ansprüche, **dadurch gekennzeichnet, dass** die erste Wärmetauschereinheit (8) zur thermischen Konditionierung der Batterie (3) einen Batteriewärmetauscher (12) umfasst, mittels dessen Wärmenergie zwischen dem Arbeitsmedium und einem Batterietemperierungssystem (13) austauschbar ist, und zur thermischen Konditionierung der Fahrerkabine (2) einen Kabinenwärmetauscher (14) umfasst, mittels dessen Wärmenergie zwischen dem Arbeitsmedium und in der Fahrerkabine (2) befindlicher Kabinenluft austauschbar ist.

5. Landwirtschaftliche Arbeitsmaschine (1) nach Anspruch 4, **dadurch gekennzeichnet, dass** der Batteriewärmetauscher (12) und der Kabinenwärmetauscher (14) parallelgeschaltet sind.

6. Landwirtschaftliche Arbeitsmaschine (1) nach Anspruch 5, **dadurch gekennzeichnet, dass** der Fluidkreislauf ein ansteuerbares Verteilventil (15) umfasst, das strömungstechnisch zwischen dem Kompressor (7) und der ersten Wärmetauschereinheit (8) angeordnet ist, wobei das Verteilventil (15) es beim Betrieb des Fluidkreislaufs als Heizkreislauf erlaubt, das Arbeitsmedium stromabwärts des Kompressors (7) wahlweise nur dem Batteriewärmetauscher (12) oder nur dem Kabinenwärmetauscher (14) oder anteilig sowohl dem Batteriewärmetauscher (12) als auch dem Kabinenwärmetauscher (14) zuzuleiten.

7. Landwirtschaftliche Arbeitsmaschine (1) nach einem der vorhergehenden Ansprüche, **dadurch gekennzeichnet, dass** die zweite Wärmetauschereinheit (10) zur thermischen Einbindung des Hydrauliksystems (5) in den Fluidkreislauf einen Hydraulikwärmetauscher (16) umfasst, mittels dessen Wärmenergie zwischen dem Arbeitsmedium und dem Hydrauliköl austauschbar ist.

8. Landwirtschaftliche Arbeitsmaschine (1) nach einem der vorhergehenden Ansprüche, **dadurch gekennzeichnet, dass** die zweite Wärmetauschereinheit (10) einen Umgebungswärmetauscher (17) umfasst, mittels dessen Wärmenergie zwischen dem Arbeitsmedium und Umgebungsluft austauschbar ist.

9. Landwirtschaftliche Arbeitsmaschine (1) nach den Ansprüchen 7 und 8, **dadurch gekennzeichnet, dass** der Hydraulikwärmetauscher (16) und der Umgebungswärmetauscher (17) parallelgeschaltet sind.

10. Landwirtschaftliche Arbeitsmaschine (1) nach Anspruch 9, **dadurch gekennzeichnet, dass** der Fluidkreislauf ein ansteuerbares Verteilventil (18) umfasst, das strömungstechnisch zwischen den beiden Wärmetauschereinheiten (8, 10) angeordnet ist, wobei das Verteilventil (18) es beim Betrieb des Fluidkreislaufs als Heizkreislauf erlaubt, das Arbeitsmedium stromabwärts der ersten Wärmetauschereinheit (8) wahlweise nur dem Hydraulikwärmetauscher (16) oder nur dem Umgebungswärmetauscher (17) oder anteilig sowohl dem Hydraulikwärmetauscher (16) als auch dem Umgebungswärmetauscher (17) zuzuleiten.

11. Landwirtschaftliche Arbeitsmaschine (1) nach Anspruch 10, **dadurch gekennzeichnet, dass** das Verteilventil (18) es beim Betrieb des Fluidkreislaufs als Kühlkreislauf erlaubt, das Arbeitsmedium stromabwärts der zweiten Wärmetauschereinheit (10) wahlweise nur dem Batteriewärmetauscher (12) oder nur dem Kabinenwärmetauscher (14) oder anteilig sowohl dem Batteriewärmetauscher (12) als auch dem Kabinenwärmetauscher (14) zuzuleiten.

12. Landwirtschaftliche Arbeitsmaschine (1) nach einem der Ansprüche 10 oder 11, **dadurch gekennzeichnet, dass** das Verteilventil (18) von dem Expansionsventil (9) gebildet ist.

13. Landwirtschaftliche Arbeitsmaschine (1), **dadurch gekennzeichnet, dass** ihr Hauptantriebsmotor von einem Elektromotor gebildet ist, wobei vorzugsweise die Arbeitsmaschine (1) ohne Verbrennungsmotor ausgeführt ist.

14. Verfahren zum Betrieb einer landwirtschaftlichen Arbeitsmaschine (1) nach einem der vorhergehenden Ansprüche,
**dadurch gekennzeichnet, dass**
der Fluidkreislauf mittels der Ventilanordnung (11) wahlweise zwischen dem Betrieb als Heizkreislauf und dem Betrieb als Kühlkreislauf umgeschaltet wird,
wobei beim Betrieb des Fluidkreislaufs als Heizkreislauf mittels der ersten Wärmetauschereinheit (8) zur thermischen Konditionierung der Batterie (3) Wärmeenergie von dem Arbeitsmedium auf ein Batterietemperierungssystem (13) und/oder zur thermischen Konditionierung der Fahrerkabine (2) Wärmenergie von dem Arbeitsmedium auf in der Fahrerkabine (2) befindliche Kabinenluft übertragen wird, wodurch das Arbeitsmedium kondensiert, und mittels der zweiten Wärmetauschereinheit (10) Wärmeenergie von dem Hydrauliköl auf das Arbeitsmedium übertragen wird, wodurch das Arbeitsmedium verdampft.

15. Verfahren nach Anspruch 13, **dadurch gekennzeichnet, dass** beim Betrieb des Fluidkreislaufs als Kühlkreislauf mittels der ersten Wärmetauschereinheit (8) zur thermischen Konditionierung der Batterie (3) Wärmeenergie von dem Batterietemperierungssystem (13) auf das Arbeitsmedium und/oder zur thermischen Konditionierung der Fahrerkabine (2) Wärmenergie von der Kabinenluft auf das Arbeitsmedium übertragen wird, wodurch das Arbeitsmedium verdampft.

16. Verfahren nach Anspruch 13 oder 14, **dadurch gekennzeichnet, dass** beim Betrieb des Fluidkreislaufs als Kühlkreislauf mittels der zweiten Wärmetauschereinheit (10) Wärmeenergie von dem Arbeitsmedium auf die Arbeitsmaschine (1) umgebende Umgebungsluft übertragen wird, um das Arbeitsmedium zu kondensieren.
